# EUROPÄISCHE PATENTSCHRIFT

(11) **EP 3 175 112 B1**
(45) Veröffentlichungstag und Bekanntmachung des Hinweises auf die Patenterteilung: **14.08.2019**
(21) Anmeldenummer: 16700572.7
(22) Anmeldetag: 13.01.2016
(51) Int. Cl.: F04B 1/14, F04B 53/14, F04B 9/04, F04B 53/00, F16C 7/02

(54) **PROZESSPUMPE MIT EINEM KURBELTRIEB**
PROCESS PUMP WITH A CRANK MECHANISM
POMPE DE PROCESS AVEC MÉCANISME BIELLE-MANIVELLE

(30) Priorität: 22.01.2015 DE 102015201071
(43) Veröffentlichungstag der Anmeldung: 07.06.2017
(73) Patentinhaber: SPX Flow Technology Germany GmbH, 22844 Norderstedt (DE)
(72) Erfinder: ROSENKRANZ, Georg, 22851 Norderstedt (DE); RIEL, Thomas, 24629 Kisdorf (DE); HUHNKE, Christian, 24576 Bad Bramstedt (DE)
(74) Vertreter: von Hirschhausen, Helge
(86) Internationale Anmeldenummer: PCT/EP2016/050566
(87) Internationale Veröffentlichungsnummer: WO 2016/116334

(56) Entgegenhaltungen:
- EP-A1- 1 736 666
- WO-A1-2013/116820
- DE-A1-102012 203 020
- US-A- 3 249 062
- US-A- 3 595 101
- US-A1- 2009 092 510

## Beschreibung

Die vorliegende Erfindung betrifft eine Prozesspumpe mit einem Kurbeltrieb. Insbesondere betrifft die Erfindung eine Prozesspumpe mit mehreren Zylindern, die jeweils einen Kreuzkopf als Verbindungselement zu einem Pleuel aufweisen, wobei die Kreuzköpfe über die Pleuel mit einer Kurbelwelle funktional verbunden sind.

Derartige Prozesspumpen mit mehreren Zylindern werden in der Regel zur Förderung großer Fördermengen und bzw. oder bei hohe Drücken eingesetzt. Ein Problem bei derartigen Prozesspumpen ist der relative große Platzbedarf, da die Pumpenköpfe konstruktiv einen gewissen Abstand zueinander benötigen, insbesondere wenn Membranpumpenköpfe verwendet werden. Unter einer Prozesspumpe wird eine oszillierende Verdrängerpumpe mit fester Hublänge verstanden.

Bei bekannten Prozesspumpen mit Kurbeltrieben sind die Zylinder parallel in Reihe angeordnet und entlang der Kurbelwelle gelagert. In diesem Fall bedeutet ein großer Zylinderabstand im Anschlussbereich für die Pumpenköpfe auch einen großen Lagerabstand auf der Kurbelwelle. Bei mehreren Zylindern und großen Pumpenköpfen, insbesondere bei Membranpumpenköpfen, muss die Kurbelwelle dementsprechend lang ausgestaltet sein. Dies erfordert wiederum besondere Eigenschaften der Kurbelwelle, insbesondere hinsichtlich Stabilität und Biegesteifigkeit. Dadurch und durch den hohen Platzbedarf kommen hohe Kosten bei Produktion und Lagerhaltung zustande.

Um dieses Problem zu lösen wird in der EP 1 736 666 B1 vorgeschlagen, dass die Zylinder in einer fächerartigen Anordnung zueinander stehen, sodass ein Höhenversatz zwischen den Zylindern äußerst gering ist bzw. überhaupt kein Höhenversatz vorliegt. Insbesondere schlägt die EP 1 736 666 B1 vor, drei Zylinder über einen Viertelkreis um die Kurbelwelle herum zu verteilen, wobei die Zylinder einen Höhenversatz von ungefähr der Dicke eines Pleuels zueinander haben. Alternativ wird in der EP 1 736 666 B1 vorgeschlagen, dass gekröpfte Pleuel verwendet werden, sodass alle Zylinder in einer zur Kurbelwelle senkrechten Ebene liegen. Durch diese Anordnung der Zylinder kann der Platzbedarf für eine Pumpe mit einem derartigen Kurbeltrieb drastisch reduziert werden, wobei gleichzeitig auch die Fertigungskosten gesenkt werden können.

Solche Prozesspumpen erzeugen inhärent hohe Massenbeschleunigungen im Fördermedium, sodass aus prozessbedingten Gründen eine gleichförmige Fördercharakteristik angestrebt wird. Bei Mehrzylinderpumpen ist dies der resultierende Gesamtförderstrom, also der sich aus den Förderströmen der einzelnen Zylinder ergebende Gesamtförderstrom. Ein weitgehend homogener Gesamtförderstrom wirkt sich günstig auf den Drehmomentverlauf des Pumpenantriebs sowie insbesondere auf die Druck- und Förderstromschwankungen in den nachfolgenden Bauteilen aus, also beispielsweise in den Rohrleitungen. Somit können aufgrund dieser Lösung die Kosten für einen geeigneten Pumpenantrieb im überschaubaren Rahmen gehalten werden. Gleichzeitig kann durch Einsparungen bei den Maßnahmen zur Rohrleitungsoptimierung ebenfalls eine Kostenreduktion erzielt werden, da kleinere Schwingungsdämpfer oder Resonatoren eingesetzt werden können oder sogar ganz auf sie verzichtet werden kann.

Die in der EP 1 736 666 B1 vorgeschlagene Lösung ist bereits sehr gut für den Einsatz auf sogenannten FPSO Einheiten (Floating Production Storage & Offloading), also beispielsweise auf Ölbohrschiffen, die auch gleichzeitig eine Weiterverarbeitung und Zwischenlagerung des geförderten Rohöls vornehmen, geeignet. Bei den hierfür eingesetzten Pumpen wird aber zunehmend mehr Förderleistung pro Flächeneinheit gefordert. Insbesondere bei sehr großen Pumpen können dann Unwuchten der beweglichen Teile besonders nachteilig sein, da die hieraus resultierenden dynamischen Anregungen insbesondere bei Schiffen problematisch sein können. Als Beispiel sei hier die durch die Schwingungen erhöhte Wahrscheinlichkeit für einen Dauerbruch genannt.

Die WO 2013/116820 A1 zeigt einen Kompressor zum Verdichten oder Entspannen von Gasen mit vier Zylindern, die jeweils über eine Pleuelstange mit der Nockenwelle verbunden sind.

In der EP 1 736 666 A1 ist ein Pumpengetriebe mit mehreren Zylindern gezeigt, welches mit Hilfe spezieller Abstimmung der Winkel zwischen Zylinderachsen und einer geeignet gewählten Kurbelkröpfung eine homogene Phasenverschiebung der Zylinderoszillation ermöglicht.

Daher ist es Aufgabe der vorliegenden Erfindung eine Prozesspumpe mit einem Kurbeltrieb aufzuzeigen, bei welchem eine hohe Gleichförmigkeit des resultierenden Gesamtförderstroms erreicht werden kann, wobei gleichzeitig aber Unwuchten weitgehend vermieden werden.

Die Lösung der Aufgabe gelingt mit einer Prozesspumpe gemäß Anspruch 1. Vorteilhafte Weiterbildungen sind in den abhängigen Ansprüchen beschrieben.

Die erfindungsgemäße Prozesspumpe hat einen Kurbeltrieb und wenigstens drei Zylinder. Die Zylinder stellen um den Kurbeltrieb gesehen einen ersten Zylinder, einen zweiten Zylinder und einen dritten Zylinder dar. Der Kurbeltrieb weist eine Kurbelwelle und für jeden Zylinder jeweils einen Kreuzkopf und ein Pleuel mit jeweils einem großen Pleuelauge zur Aufnahme der Kurbelwelle auf. Die Kreuzköpfe sind über die Pleuel mit der Kurbelwelle funktional verbunden.

Die erfindungsgemäße Prozesspumpe zeichnet sich gegenüber dem eingangs genannten Stand der Technik dadurch aus, dass die Kurbelwelle als Exzenterwelle mit einem ersten Exzenter und einem zweiten Exzenter ausgebildet ist, wobei der Pleuel des ersten Zylinders und der Pleuel des dritten Zylinders am ersten Exzenter angeordnet sind, und wobei der Pleuel des zweiten Zylinders am zweiten Exzenter angeordnet ist, sodass das große Pleuelauge des Pleuels des ersten Zylinders und das große Pleuelauge des Pleuels des dritten Zylinders eine gemeinsame Mittelachse aufweisen. Mit anderen Worten ist das große Pleuelauge des Pleuels des zweiten Zylinders am zweiten Exzenter gelagert, und die großen Pleuelaugen der Pleuel des ersten und des dritten Zylinders sind am ersten Exzenter gelagert, sodass die großen Pleuelaugen der Pleuel des ersten und des dritten Zylinders um eine gemeinsame Mittelachse schwenken können.

Diese Anordnung hat den Vorteil, dass auch bei großen Prozesspumpen und entsprechend hohen Förderleistungen bzw. entsprechend hohen Drücken ein gleichmäßiger Förderstrom erreicht wird und die aufgrund der Unwuchten der beweglichen Teile auftretenden Schwingungen deutlich gegenüber den aus dem Stand der Technik bekannten Lösungen reduziert werden. Somit erfordert eine erfindungsgemäße Prozesspumpe wenn überhaupt nur verhältnismäßig kleine Ausgleichsmassen, um die entstehenden Vibrationen zu eliminieren bzw. zu minimieren. Folglich eignet sich eine derartige Prozesspumpe besonders gut für den Einsatz auf FPSO Einheiten und trägt den gestiegenen Anforderungen in diesem Bereich Rechnung.

Ein weiterer Vorteil der erfindungsgemäßen Prozesspumpe ist darin zu sehen, dass eine Standardisierung der verwendeten Teile erfolgen kann. Dadurch sind außer dem Antriebsstrang im Wesentlichen alle Teile des Kurbeltriebs, wie zum Beispiel die Exzenterwelle, die Pleuel und die Kreuzköpfe unabhängig vom eingesetzten Pumpenkopf und es sind daher keine spezifischen Anpassungen vorzunehmen. Der Kurbeltrieb kann unverändert sowohl für einfach- als auch für doppeltwirkende Pumpenköpfe verwendet werden. Somit ergibt sich auch eine deutliche Kostenreduktion der erfindungsgemäßen Prozesspumpe, da sich eine wesentliche Anzahl von einzelnen Komponenten für eine Vielzahl verschiedener Pumpenarten eignet.

Vorzugsweise weist die Prozesspumpe genau drei Zylinder auf. Hierdurch kann ein besonders einfacher Aufbau bei gleichzeitiger Reduktion der Unwuchten erreicht werden.

Zweckmäßigerweise hat die Prozesspumpe die Ansteuerfolge: erster Zylinder - dritter Zylinder - zweiter Zylinder. In diesem Zusammenhang ist es ebenfalls von Vorteil, wenn die Achsen der jeweils benachbarten Zylinder zueinander einen Winkelversatz von 60° aufweisen. Somit ergibt sich bei drei Zylindern eine Anordnung über 120°, d.h. der maximale Winkel zwischen den Achsen der zwei am weitesten voneinander entfernt liegenden Zylindern beträgt 120°. Unter der Achse eines Zylinders wird hier die Mittelachse eines Zylinders verstanden, die sich im Wesentlichen senkrecht von der Drehachse der Kurbelwelle bzw. der Exzenterwelle erstreckt. Insbesondere wenn die beiden Exzenter der Exzenterwelle um 180° zueinander versetzt sind, hat diese Anordnung hat den Vorteil, dass ein idealer Phasenversatz von 120° der einzelnen Förderströme eines jeden Zylinders entsteht, sodass ein möglichst homogener hieraus resultierender Gesamtförderstrom entsteht. Die Winkel zwischen den Achsen bzw. der Winkelversatz sind hierbei so zu verstehen, dass für deren Bestimmung die Achsen auf eine gemeinsame, senkrecht zur Drehachse der Exzenterwelle angeordnete Ebene projiziert werden, sodass etwaige Höhenversätze entlang der Exzenterwelle unberücksichtigt bleiben.

Hierbei ist es zweckmäßig, wenn der Winkelversatz zwischen der Achse des ersten Zylinders und der Achse des dritten Zylinders 120° beträgt. Somit kann bei der Ansteuerfolge erster Zylinder - dritter Zylinder - zweiter Zylinder der mittlere Zylinder auf der untersten Position angeordnet sein, wodurch sich zusätzlich zu den vorgenannten Vorteilen ein besonders kompakter und raumsparender Kurbeltrieb - und somit eine entsprechende Prozesspumpe - realisieren lässt.

Vorteilhafterweise ist wenigstens einer der beiden Exzenter, vorzugsweise sind beide, als Exzenterscheibe ausgebildet. Exzenterscheiben haben den Vorteil, dass diese eine gute Kraftverteilung innerhalb der Kurbelwelle bzw. der Exzenterwelle beim Betrieb ermöglichen, sodass es nicht zu einem Dauerermüdungsbruch oder dergleichen kommen kann.

Auch ist es von Vorteil, wenn der erste Exzenter und der zweite Exzenter um 180° versetzt an der Exzenterwelle angeordnet sind. Diese Art der Anordnung reduziert die Unwucht im Kurbeltrieb während des Betriebs, ermöglicht einen gleichförmigen Phasenversatz der entstehenden Teilförderströme der einzelnen Zylinder und erlaubt außerdem eine noch kompaktere Bauform.

Zweckmäßigerweise weisen die Pleuel jeweils einen Pleuelschaft und ein kleines Pleuelauge zur funktionalen Verbindung mit den Kreuzköpfen auf, wobei das große Pleuelauge, der Pleuelschaft und das kleine Pleuelauge der jeweiligen Pleuel einteilig ausgebildet sind. Dies hat den Vorteil, dass die Pleuel zum einen günstiger zu fertigen sind, da diese nur aus einem Teil bestehen. Zum anderen ergibt sich so auch der Vorteil der einfacheren Montage, da die Pleuel lediglich auf die dafür vorgesehene Lagerfläche an der Exzenterwelle aufgeschoben werden müssen. Weiterhin sind einteilige Pleuel beim Betrieb von doppeltwirkenden Pumpenköpfen von Vorteil, da im Gegensatz zu geteilten Pleueln keine Verbindungsschrauben belastet werden, die einem Dauerbruch unterliegen könnten. Selbstverständlich ist hier der zusätzliche Einsatz von entsprechenden Lagermitteln, also beispielsweise Wälzlagern, wie Kugel- oder Rollenlager oder auch Gleitlagern zur optimalen Lagerung der Pleuel denkbar. Auch kann der axiale Abstand der Pleuel zueinander durch entsprechende Gleitscheiben eingestellt werden.

Weiterbildend ist die Exzenterwelle einteilig ausgebildet. Eine einteilige Exzenterwelle hat den Vorteil, dass sich eine bessere Kraftverteilung innerhalb der Exzenterwelle ergibt, da für die Exzenterwelle keine formschlüssige Verbindung von zwei Wellenteilen notwendig ist. Ferner kann der Kurbeltrieb einfacher und schneller montiert bzw. zu Wartungszwecken demontiert werden. Schließlich ist der Kurbeltrieb bzw. die Prozesspumpe so auch kostengünstig in der Herstellung.

Weiterbildend ist an der Exzenterwelle eine Ausgleichsmasse angeordnet. Diese Ausgleichsmasse trägt dazu bei, die Unwuchten - und damit die auftretenden Schwingungen - während des Betriebs weiter zu vermindern bzw. zu eliminieren. Ferner kann so auch der Verschleiß der Lager der Exzenterwelle reduziert werden. Versuche haben hierbei gezeigt, dass eine Ausgleichsmasse die im Betrieb auftretenden Unwuchtkräfte in X-Richtung und Y-Richtung - also in die Richtungen, die senkrecht zur Drehachse der Exzenterwelle verlaufen - um bis zu 50% reduzieren kann. Denkbar ist, dass die Ausgleichsmasse über eine Verzahnung oder dergleichen in der radialen Lage bezüglich der Exzenterwelle festlegbar ist. Zur Festlegung der Ausgleichsmasse in axialer Richtung können geeignete Klemm- oder Fixierungsmittel eingesetzt werden. Insbesondere ist es vorteilhaft, wenn die Ausgleichsmasse in axialer Richtung der Exzenterwelle gesehen vor dem ersten Zylinder an einem Ende der Exzenterwelle angeordnet ist, sodass man etwaige Anpassungen an der Ausgleichsmasse schnell und einfach vornehmen kann, ohne dass der gesamte Kurbeltrieb zu demontieren ist.

Es ist zweckmäßig, wenn die erfindungsgemäße Prozesspumpe wenigstens einen Pumpenkopf aufweist, der je nach Anforderung als einfachwirkender oder doppeltwirkender Pumpenkopf ausgebildet sein kann. Bevorzugt werden alle Zylinder entweder mit einfachwirkenden oder doppeltwirkenden Pumpköpfen ausgestattet. Einfachwirkende Pumpenköpfe haben gegenüber doppeltwirkenden Pumpenköpfen den Vorteil, dass der Platzbedarf etwas geringer ist. Mithin eignen sich diese Pumpenköpfe insbesondere bei beengten Aufstellverhältnissen für die Prozesspumpe. Doppeltwirkende Pumpenköpfe haben den Vorteil, dass diese den doppelten Förderstrom ermöglichen, da sie in beide Bewegungsrichtungen der Kolbenstange eine Förderwirkung erzeugen.

Vorzugsweise ist wenigstens ein Pumpenkopf als Membranpumpenkopf ausgebildet, denkbar ist aber auch, dass Kolbenpumpenköpfe zum Einsatz kommen. Die Kolbenpumpenköpfe können ebenfalls einfach- oder doppeltwirkend ausgelegt sein. Insbesondere Membranpumpenköpfe haben den Vorteil, dass das Fördermedium hermetisch gegen die Atmosphäre abgedichtet ist und somit ein Kontakt des Fördermediums mit der Umwelt oder Teilen des Pumpenantriebs verhindert werden kann. Bei der Verwendung von doppeltwirkenden Pumpenköpfen, insbesondere bei doppelwirkenden Membranpumpenköpfen, kann gleichzeitig auch ein großer Gesamtförderstrom erreicht werden.

Nachfolgend wird die Erfindung anhand von in der Zeichnung dargestellten Ausführungsbeispielen näher erläutert. Hierbei zeigen schematisch:
- Fig. 1: eine perspektivische Ansicht einer erfindungsgemäßen Prozesspumpe mit doppeltwirkenden Pumpenköpfen;
- Fig. 2: einen Schnitt durch einen Teil der in Fig. 1 gezeigten Prozesspumpe;
- Fig. 3: eine perspektivische Ansicht eines erfindungsgemäßen Kurbeltriebs und den jeweiligen Pleuel und Kreuzköpfen;
- Fig. 4: eine Draufsicht auf den in Fig. 3 gezeigten Kurbeltrieb;
- Fig. 5: einen Schnitt durch den in Fig. 3 gezeigten Kurbeltrieb;
- Fig. 6: eine Seitenansicht einer Exzenterwelle eines erfindungsgemäßen Kurbeltriebs;
- Fig. 7: eine schematische Prinzipskizze einer erfindungsgemäßen Prozesspumpe mit doppeltwirkenden Pumpenköpfen;
- Fig. 8: ein Förderstromdiagramm für das in Fig. 7 gezeigte Prinzip;
- Fig. 9: eine schematische Prinzipskizze einer erfindungsgemäßen Prozesspumpe mit einfachwirkenden Pumpenköpfen; und
- Fig. 10: ein Förderstromdiagramm für das in Fig. 9 gezeigte Prinzip.

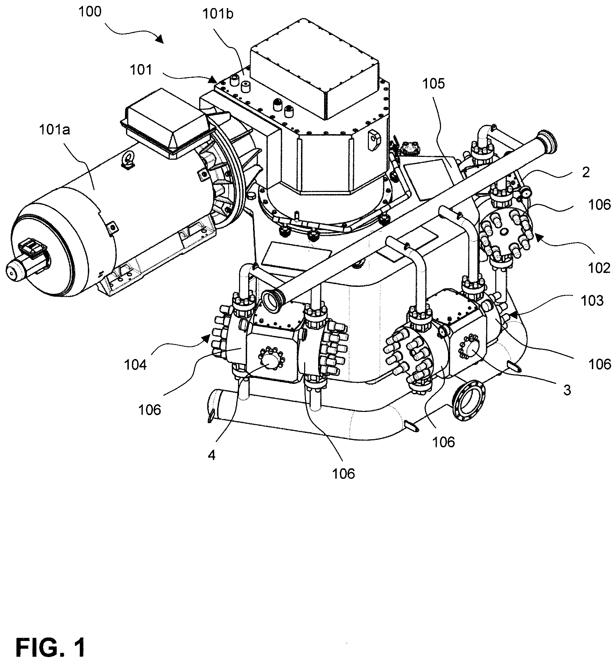

Eine erfindungsgemäße Prozesspumpe 100 ist in Fig. 1 dargestellt. Die Prozesspumpe 100 hat drei Zylinder 2, 3, 4, die in oder gegen Uhrzeigerrichtung gesehen einen ersten Zylinder 2 (in Fig. 1 der hinterste Zylinder), einen zweiten Zylinder 3 (in Fig. 1 der mittlere Zylinder) und einen dritten Zylinder 4 (in Fig. 1 der vorderste Zylinder) darstellen. Im Folgenden sind Bauteile, die mit "erstes", "zweites", "drittes" oder dergleichen bezeichnet sind, dem entsprechenden Zylinder 2, 3, 4 zugeordnet zu verstehen.

Des Weiteren ist in Fig. 1 zu erkennen, dass die Prozesspumpe 100 doppeltwirkende Pumpenköpfe 102, 103, 104 aufweist, die neben den Zylindern 2, 3, 4 jeweils zwei Pumpendeckel 106 umfassen, an welche die Rohrleitungen angebaut sind, die in die Saug- bzw. Druckleitung münden. Die Prozesspumpe 100 weist ferner einen Antrieb 101 (beispielsweise einen Elektromotor 101a und ein Reduziergetriebe 101b) und ein Gehäuse 105 auf.

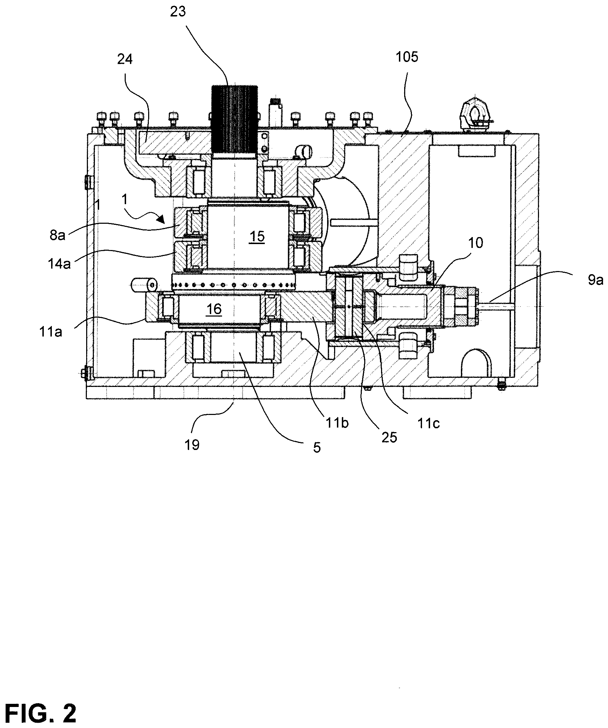

Ein Schnitt durch das Gehäuse 105 (ohne den Antrieb 101) ist in Fig. 2 dargestellt. Man erkennt, wie der Kurbeltrieb 1 im montierten und betriebsbereiten Zustand der Prozesspumpe 100 innerhalb des Gehäuses 105 gelagert ist. Im Folgenden wird nun der Kurbeltrieb 1 mit seinen Einzelheiten genauer erklärt.

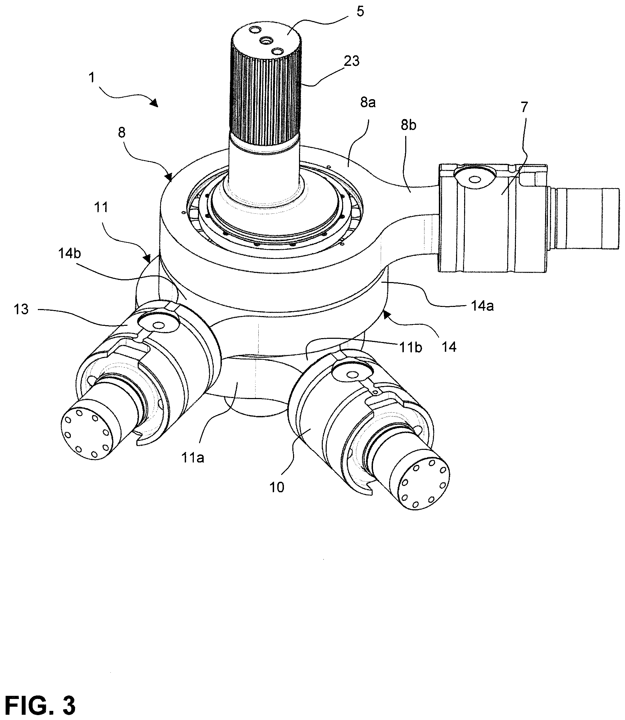

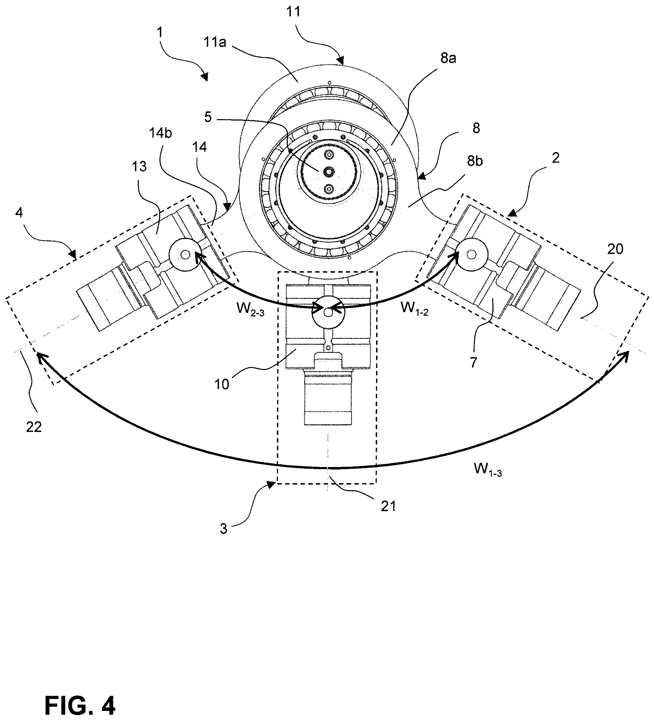

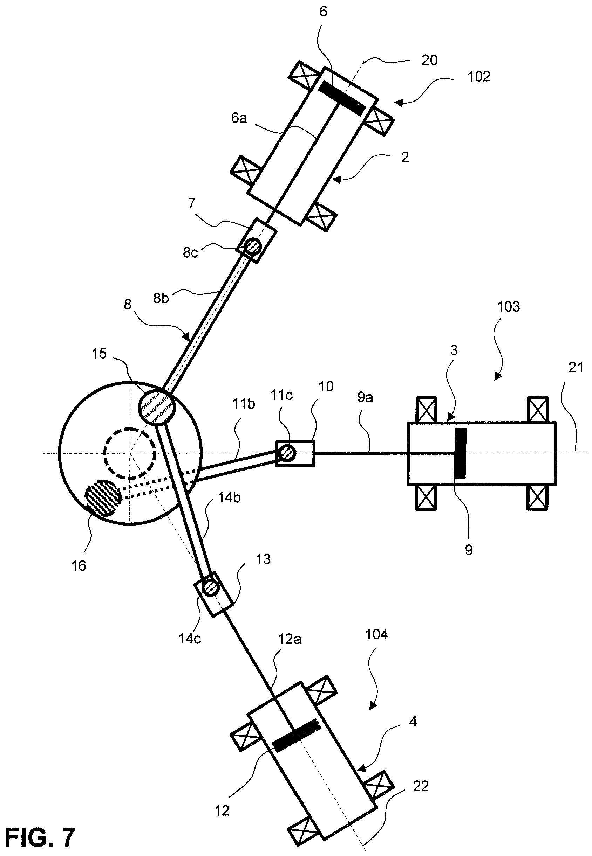

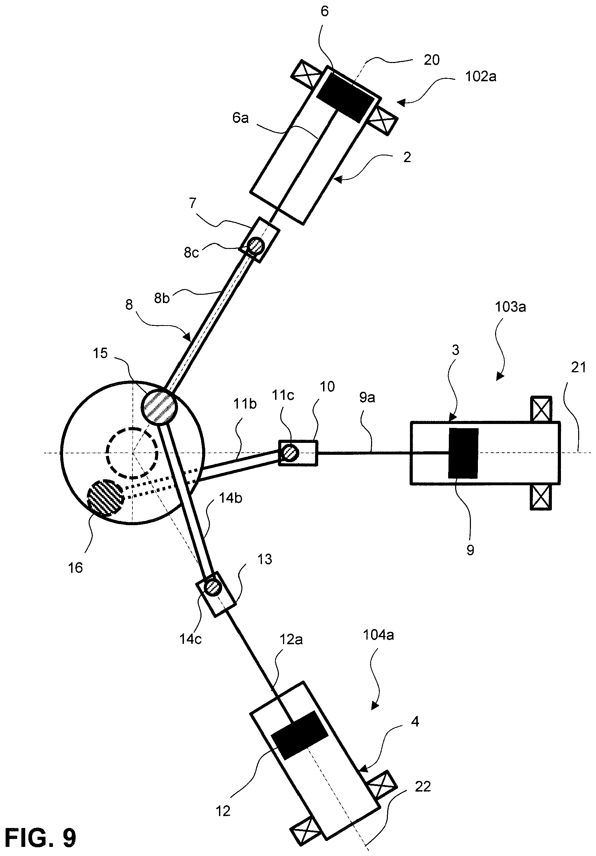

In den Fig. 3 bis Fig. 5 ist ein erfindungsgemäßer Kurbeltrieb 1 in verschiedenen Ansichten bzw. als Schnitt dargestellt. Der Kurbeltrieb 1 hat eine einteilige als Exzenterwelle 5 ausgebildete Kurbelwelle, über welche die drei Zylinder 2, 3, 4 angetrieben werden. Die Zylinder 2, 3, 4 sind in Fig. 4 durch die gestrichelten Kästen angedeutet. Die Zylinder 2, 3, 4 weisen jeweils einen Kolben 6, 9, 12 mit einer Kolbenstange 6a, 9a, 12a (vgl. Fig. 7 und Fig. 9) auf, der über jeweils einen Kreuzkopf 7, 10, 13 mit jeweils einem einteiligen Pleuel 8, 11, 14 verbunden ist. Über die Kreuzköpfe 7, 10, 13 werden die schwenkbaren Pleuel 8, 11, 14 mit den lediglich linear zu bewegenden Kolben 6, 9, 12 verbunden, sodass aus einer anfänglich drehenden Bewegung der Exzenterwelle 5 eine lineare Bewegung der Kolben 6, 9, 12 resultiert. Wie aus den Fig. 3 bis 5 gut zu erkennen, sind die Pleuel 8, 11, 14 und die zugehörigen Kreuzköpfe 7, 10, 13 identisch aufgebaut.

In oder gegen Uhrzeigerrichtung um den Kurbeltrieb 1 bzw. die Exzenterwelle 5 gesehen, d.h. entlang der Mittel- bzw. Drehachse 19 der Exzenterwelle 5, gibt es also einen ersten Zylinder 2 mit einem ersten Kolben 6, der über einen ersten Kreuzkopf 7 sowie über den ersten Pleuel 8 mit der Exzenterwelle 5 funktional verbunden ist. Hieran schließt sich in oder gegen Uhrzeigerrichtung gesehen der zweite Zylinder 3 mit dem zweiten Kolben 9 an, der über den zweiten Kreuzkopf 10 und den zweiten Pleuel 11 ebenfalls mit der Exzenterwelle 5 in funktionaler Verbindung steht. In oder gegen Uhrzeigerrichtung gesehen folgt dann der dritte Zylinder 4 mit dem dritten Kolben 12, der über den dritten Kreuzkopf 13 und den dritten Pleuel 14 mit der Exzenterwelle 5 funktional verbunden ist.

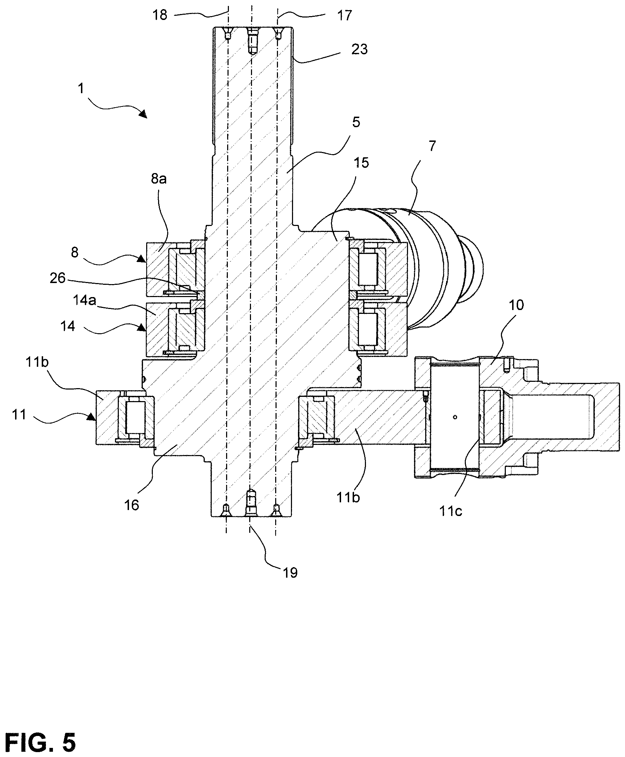

Die Pleuel 8, 11, 14 weisen jeweils ein großes Pleuelauge 8a, 11a, 14a einen Pleuelschaft 8b, 11b, 14b und ein kleines Pleuelauge 8c, 11c, 14c auf, an welchem der jeweilige Kreuzkopf 7, 9, 11 mittels eines Bolzen 25 angeordnet ist. Dies ist beispielsweise den Schnittansichten gemäß Fig. 2 und Fig. 5 zu entnehmen, wobei die hier nur für den zweiten Zylinder 3 dargestellte Anordnung identisch für den ersten Zylinder 2 und den dritten Zylinder 4 ausgeführt ist.

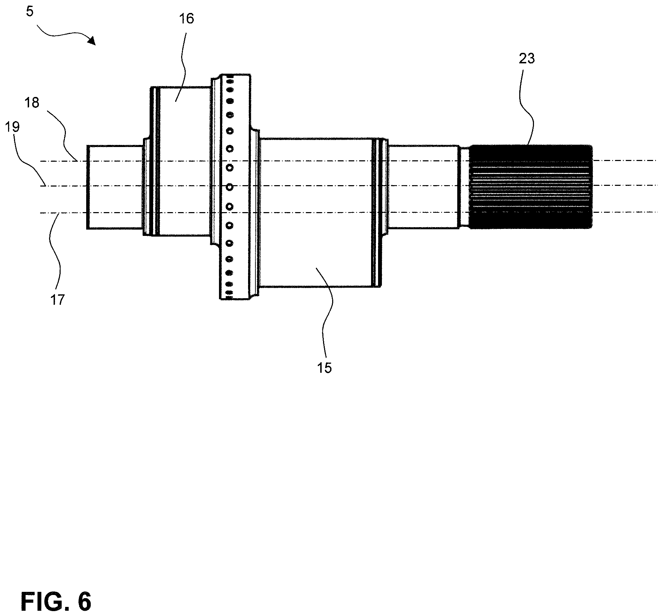

Die Exzenterwelle 5 weist einen ersten Exzenter 15 und einen zweiten Exzenter 16 in Form von Exzenterscheiben auf, wie in Fig. 6 gut zu erkennen ist. Der erste Exzenter 15 und der zweite Exzenter 16 sind um 180° versetzt an der Exzenterwelle 5 angeordnet. Am ersten Exzenter 15 ist das große Pleulauge 8a des ersten Pleuels 8 sowie das große Pleuelauge 14a des dritten Pleuels 14 gelagert. Am zweiten Exzenter 16 ist nur das große Pleuelauge 11a des zweiten Pleuels 11 gelagert. Wie man beispielsweise aus Fig. 5 erkennen kann, sind die großen Pleuelaugen 8a, 11a, 14a an der Exzenterwelle 5 bzw. am ersten Exzenter 15 oder zweiten Exzenter 16 über Wälzlager (in diesem Beispiel über Zylinderrollenlager) gelagert. Denkbar ist auch die Verwendung von Gleitlagern.

Wie man insbesondere gut in Fig. 5 erkennt, ist der Abstand in axialer Richtung der Exzenterwelle 5 zwischen dem Pleuel 8 des ersten Zylinders 2 und dem Pleuel 14 des dritten Zylinders 4 gering und wird durch eine Gleitscheibe 26 bedingt.

Wirkungsgemäß haben der erste Exzenter 15 und der zweite Exzenter 16 eine Drehachse 17 bzw. 18, die von der Dreh- bzw. Mittelachse 19 der Exzenterwelle 5 versetzt ist, siehe beispielsweise Fig. 5 oder Fig. 6. Wie eben beschrieben werden der erste Zylinder 2 und der dritte Zylinder 4 über den ersten Exzenter 15 angetrieben, sodass der Pleuel 8 des ersten Zylinders 2 und der Pleuel 14 des dritten Zylinders 3 eine gemeinsame Mittelachse 17 haben.

Erfindungsgemäß sind die Zylinder 2, 3, 4 so zueinander angeordnet, dass deren Achsen 20, 21, 22 (siehe zum Beispiel Fig. 4) jeweils in einem Winkelversatz von 60° zueinander stehen. Hierbei steht der erste Zylinder 2 zu dem direkt benachbarten zweiten Zylinder 3 in einem Winkelversatz W₁₋₂ von 60°, wobei der dritte Zylinder 4 zu dem direkt benachbarten zweiten Zylinder 3 in einem Winkelversatz W₂₋₃ von ebenfalls 60° steht. Somit ergibt sich ein Winkelversatz W₁₋₃ zwischen dem ersten Zylinder 2 und dem dritten Zylinder 4 von insgesamt 120°. Hieraus ergibt sich auch, dass die Ansteuerfolge der Zylinder so ist, dass zuerst der erste Zylinder 2 angesteuert wird, dann der dritte Zylinder 4 und anschließend der zweite Zylinder 3, bevor die Ansteuerung von neuem beginnt, wenn die Exzenterwelle 5 eine Umdrehung ausgeführt hat.

Um den im Betrieb auftretenden Unwuchten zu begegnen weist der Kurbeltrieb 1 eine Ausgleichsmasse 24 auf, die an der Exzenterwelle 5 angeordnet ist. Wie in Fig. 2 dargestellt, weist die Exzenterwelle 5 zur Aufnahme der Ausgleichsmasse 24 eine in axialer Richtung gesehen vor dem ersten Zylinder 2 liegende Verzahnung 23 auf. Auf diese Verzahnung 23 kann, wie in Fig. 2 gezeigt, die Ausgleichsmasse 24 aufgesteckt werden. Im eingebauten Zustand des Kurbeltriebs 1 wird auf diese Verzahnung 23 die Ausgleichsmasse 24 aufgesetzt, die beispielsweise ein geschlitztes Ende mit radial wirkendem Befestigungselement aufweisen kann, um die Ausgleichsmasse 24 in der axialen Lage auf der Exzenterwelle 5 zu sichern. Des Weiteren kann über die Verzahnung 23 der Exzenterwelle 5 auch der Antrieb des Kurbeltriebs 1 erfolgen.

Wie man gut in Fig. 2 erkennen kann, ist aufgrund der einteiligen Exzenterwelle 5 und der einteiligen Pleuel 8, 11, 14 eine einfache Montage des Kurbeltriebs 1 möglich. Hierzu werden zunächst Pleuel 11 und Kreuzkopf 10 des zweiten Zylinders 3 montiert. Dann wird die Exzenterwelle 5 in das Gehäuse 105 eingebaut, sodass anschließend Pleuel 14 und Kreuzkopf 13 des dritten Zylinders 4, dann Pleuel 8 und Kreuzkopf 7 des ersten Zylinders 2 und abschließend die Ausgleichsmasse 24 montiert werden können. Das Gehäuse 105 wird dann geschlossen und die restlichen Komponenten der erfindungsgemäßen Prozesspumpe 100 werden montiert.

Bei einer erfindungsgemäßen Prozesspumpe 100 können als Pumpenköpfe doppeltwirkende Pumpenköpfe 102, 103, 104 (vgl. Fig. 7) oder einfachwirkende Pumpenköpfe 102a, 103a, 104a (vgl. Fig. 9) zum Einsatz kommen, insbesondere in Form von Membranpumpenköpfen. Ein Vorteil der erfindungsgemäßen Prozesspumpe 100 liegt darin, dass mit der Ansteuerfolge erster Zylinder 2 - dritter Zylinder 4 - zweiter Zylinder 3 sowohl einfachwirkende Pumpenköpfe 102a, 103a, 104a als auch doppeltwirkende Pumpenköpfe 102, 103, 104 eingesetzt werden können, ohne dass hierfür der Kurbeltrieb 1 geändert werden muss und dennoch jeweils ein Phasenversatz von 120° der Teilförderströme erzielt wird. Schematisch ist das entsprechende Prinzip mit doppeltwirkenden Pumpenköpfen 102, 103, 104 in Fig. 7 dargestellt, das entsprechende Prinzip mit einfachwirkenden Pumpenköpfen 102a, 103a, 104a in Fig. 9.

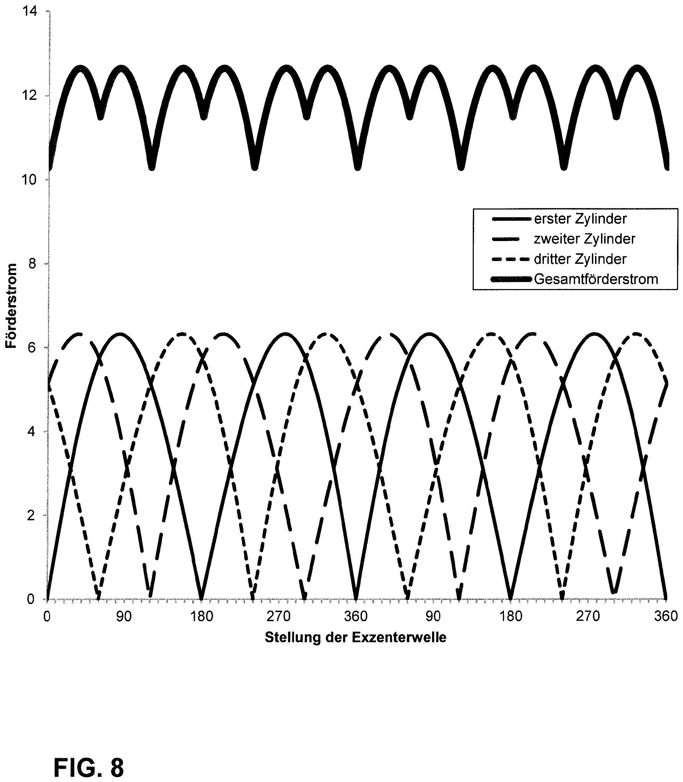

Die einzelnen Förderströme eines jeden Zylinders 2, 3, 4 der mit doppelwirkenden Pumpenköpfen 102, 103, 104 ausgestattet ist, sowie der resultierende Gesamtförderstrom sind in Fig. 8 dargestellt. Auf der Abszisse ist die Stellung der Exzenterwelle 5 in Grad [°] angegeben, auf der Ordinate ist der Förderstrom angegeben, welcher in der Regel die Einheit Menge bzw. Volumen pro Zeiteinheit hat [m³/h]. Der Förderstrom des ersten Zylinders 2 ist als durchgezogene Linie dargestellt, der Förderstrom des zweiten Zylinders 3 ist als langgestrichelte Linie dargestellt und der Förderstrom des dritten Zylinders 4 ist als kurzgestrichelte Linie dargestellt. Der aus den einzelnen Förderströmen resultierende Gesamtförderstrom ist als dicke Linie dargestellt. Hierbei ist zu erkennen, dass der resultierende Gesamtförderstrom weitgehend homogen verläuft.

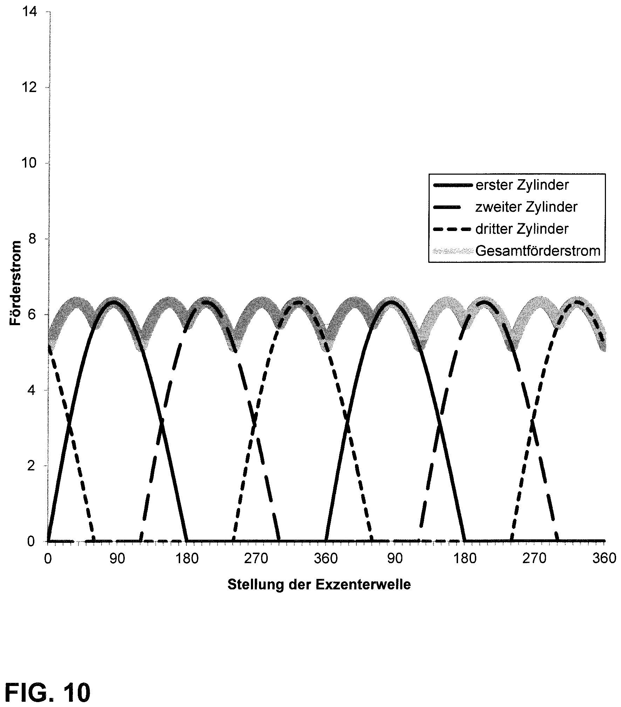

Ein entsprechendes Diagramm mit den einzelnen Förderströmen eines jeden Zylinders 2, 3, 4 der mit einfachwirkenden Pumpenköpfen 102a, 103a, 104a ausgestattet ist sowie der resultierende Gesamtförderstrom ist in Fig. 10 dargestellt. Die Darstellung ist im Wesentlichen identisch mit der Darstellung in Fig. 8, sodass auf vorstehendes verwiesen wird. Auch für die einfachwirkenden Pumpenköpfe ist zu erkennen, dass der in dieser Abbildung als dicke graue Linie dargestellt resultierende Gesamtförderstrom äußerst homogen verläuft und nur eine geringe Schwankung aufweist.

### Bezugszeichenliste

- 1: Kurbeltrieb
- 2: erster Zylinder
- 3: zweiter Zylinder
- 4: dritter Zylinder
- 5: Exzenterwelle
- 6: Kolben des ersten Zylinders
- 6a: Kolbenstange
- 7: Kreuzkopf des ersten Zylinders
- 8: Pleuel des ersten Zylinders
- 8a: großes Pleuelauge
- 8b: Pleuelschaft
- 8c: kleines Pleuelauge
- 9: Kolben des zweiten Zylinders
- 9a: Kolbenstange
- 10: Kreuzkopf des zweiten Zylinders
- 11: Pleuel des zweiten Zylinders
- 11a: großes Pleuelauge
- 11b: Pleuelschaft
- 11c: kleines Pleuelauge
- 12: Kolben des dritten Zylinders
- 12a: Kolbenstange
- 13: Kreuzkopf des dritten Zylinders
- 14: Pleuel des dritten Zylinders
- 14a: großes Pleuelauge
- 14b: Pleuelschaft
- 14c: kleines Pleuelauge
- 15: erster Exzenter
- 16: zweiter Exzenter
- 17: Mittelachse der großen Pleuelaugen der Pleuel des ersten und des dritten Zylinders / Mittelachse des ersten Exzenters
- 18: Mittelachse des großen Pleuelauge des Pleuels des zweiten Zylinders / Mittelachse des zweiten Exzenters
- 19: Mittel- bzw. Drehachse der Exzenterwelle
- 20: Achse des ersten Zylinders
- 21: Achse des zweiten Zylinders
- 22: Achse des dritten Zylinders
- 23: Verzahnung
- 24: Ausgleichmasse
- 25: Bolzen
- 26: Gleitscheibe

- 100: Prozesspumpe
- 101: Antrieb
- 101a: Elektromotor
- 101b: Reduziergetriebe
- 102: Pumpenkopf des ersten Zylinders (doppeltwirkend)
- 102a: Pumpenkopf des ersten Zylinders (einfachwirkend)
- 103: Pumpenkopf des zweiten Zylinders (doppeltwirkend)
- 103a: Pumpenkopf des zweiten Zylinders (einfachwirkend)
- 104: Pumpenkopf des dritten Zylinders (doppeltwirkend)
- 104a: Pumpenkopf des dritten Zylinders (einfachwirkend)
- 105: Gehäuse
- 106: Pumpendeckel

- W₁₋₂: Winkelversatz zwischen erstem und zweitem Zylinder
- W₂₋₃: Winkelversatz zwischen zweitem und drittem Zylinder
- W₁₋₃: Winkelversatz zwischen erstem und drittem Zylinder

## Patentansprüche

1. Prozesspumpe (100) mit einem Kurbeltrieb (1) und wenigstens drei Zylindern (2, 3, 4), die um den Kurbeltrieb (1) gesehen einen ersten Zylinder (2), einen zweiten Zylinder (3) und einen dritten Zylinder (4) darstellen, wobei der Kurbeltrieb (1) eine Kurbelwelle aufweist, **dadurch gekennzeichnet, dass** der Kurbeltrieb (1) für jeden Zylinder (2, 3, 4) jeweils einen Kreuzkopf (7, 10, 13) und ein Pleuel (8, 11, 14) mit jeweils einem großes Pleuelauge (8a, 11a, 14a) zur Aufnahme der Kurbelwelle aufweist, wobei die Kreuzköpfe (7, 10, 13) über die Pleuel (8, 11, 14) mit der Kurbelwelle funktional verbunden sind, wobei die Kurbelwelle als Exzenterwelle (5) mit einem ersten Exzenter (15) und einem zweiten Exzenter (16) ausgebildet ist, wobei der Pleuel (8) des ersten Zylinders (2) und der Pleuel (14) des dritten Zylinders (4) am ersten Exzenter (15) angeordnet sind, und wobei der Pleuel (11) des zweiten Zylinders (3) am zweiten Exzenter (16) angeordnet ist, sodass das große Pleuelauge (8a) des Pleuels (8) des ersten Zylinders (2) und das große Pleuelauge (14a) des Pleuels (14) des dritten Zylinders (4) eine gemeinsame Mittelachse (17) aufweisen, wobei der Kurbeltrieb (1) eine Ansteuerfolge erster Zylinder (2) - dritter Zylinder (4) - zweiter Zylinder (3) hat.

2. Prozesspumpe (100) nach Anspruch 1,
**dadurch gekennzeichnet, dass**
der Kurbeltrieb (1) genau drei Zylinder (2, 3, 4) aufweist.

3. Prozesspumpe (100) nach Anspruch 1 oder 2,
**dadurch gekennzeichnet, dass**
die Achsen (20, 21, 22) der jeweils benachbarten Zylinder (2, 3, 4) einen Winkelversatz (W₁₋₂, W₂₋₃) von 60° zueinander aufweisen.

4. Prozesspumpe (100) nach Anspruch 3,
**dadurch gekennzeichnet, dass**
der Winkelversatz (W₁₋₃) zwischen der Achse (20) des ersten Zylinders (2) und der Achse (22) des dritten Zylinders (4) 120° beträgt.

5. Prozesspumpe (100) nach einem der vorhergehenden Ansprüche,
**dadurch gekennzeichnet, dass**
wenigstens einer der beiden Exzenter (15, 16), vorzugsweise beide, als Exzenterscheibe ausgebildet ist bzw. sind.

6. Prozesspumpe (100) nach einem der vorhergehenden Ansprüche,
**dadurch gekennzeichnet, dass**
der erste Exzenter (15) und der zweite Exzenter (16) um 180° versetzt an der Exzenterwelle (5) angeordnet sind.

7. Prozesspumpe (100) nach einem der vorhergehenden Ansprüche
**dadurch gekennzeichnet, dass**
die Pleuel (8, 11, 14) jeweils einen Pleuelschaft (8b, 11b, 14b) und ein kleines Pleuelauge (8c, 11c, 14c) zur funktionalen Verbindung mit den Kreuzköpfen (7, 10, 13) aufweisen, wobei das große Pleuelauge (8a, 11a, 14a), der Pleuelschaft (8b, 11b, 14b) und das kleine Pleuelauge (8c, 11c, 14c) einteilig ausgebildet sind.

8. Prozesspumpe (100) nach einem der vorhergehenden Ansprüche
**dadurch gekennzeichnet, dass**
die Exzenterwelle (5) einteilig ausgebildet ist.

9. Prozesspumpe (100) nach einem der vorhergehenden Ansprüche,
**dadurch gekennzeichnet, dass**
eine Ausgleichsmasse (24) an der Exzenterwelle (5) angeordnet ist.

10. Prozesspumpe (100) nach einem der vorhergehenden Ansprüche,
**dadurch gekennzeichnet, dass**
die Prozesspumpe (100) wenigstens ein Pumpenkopf aufweist, der als einfachwirkender (102a, 103a, 104a) oder doppeltwirkender Pumpenkopf (102, 103, 104) ausgebildet ist.

11. Prozesspumpe (100) nach Anspruch 10,
**dadurch gekennzeichnet, dass**
der wenigstens eine Pumpenkopf (102, 102a, 103, 103a, 104, 104a) als Membranpumpenkopf ausgebildet ist.

## Claims

1. A process pump (100) having a crank mechanism (1) and at least three cylinders (2, 3, 4) that when seen around the crank mechanism (1) represent a first cylinder (2), a second cylinder (3) and a third cylinder (4), wherein the crank mechanism (1) has a crankshaft,
**characterized in that**
the crank mechanism (1) has for each cylinder (2, 3, 4) a crosshead (7, 10, 13) each and a connecting rod (8, 11, 14), each having a large connecting rod top end (8a, 11a, 14a) for receiving the crankshaft, wherein the crossheads (7, 10, 13) are functionally connected to the crankshaft via the connecting rods (8, 11, 14),
wherein the crankshaft is formed as an eccentric shaft (5) with a first eccentric (15) and a second eccentric (16), wherein the connecting rod (8) of the first cylinder (2) and the connecting rod (14) of the third cylinder (4) are arranged on the first eccentric (15), and wherein the connecting rod (11) of the second cylinder (3) is arranged on the second eccentric (16), so that the large connecting rod top end (8a) of the connecting rod (8) of the first cylinder (2) and the large connecting rod top end (14a) of the connecting rod (14) of the third cylinder (4) have a common central axis (17), wherein the crank mechanism (1) has a control sequence first cylinder (2) - third cylinder (4) - second cylinder (3).

2. The process pump (100) according to claim 1,
**characterized in that**
the crank mechanism (1) has exactly three cylinders (2, 3, 4).

3. The process pump (100) according to claim 1 or 2,
**characterized in that**
the axes (20, 21, 22) of adjacent cylinders (2, 3, 4) have an angular offset (W₁₋₂, W₂₋₃) of 60° to each other.

4. The process pump (100) according to claim 3,
**characterized in that**
the angular offset (W₁₋₃) between the axis (20) of the first cylinder (2) and the axis (22) of the third cylinder (4) is 120°.

5. The process pump (100) according to any one of the preceding claims,
**characterized in that**
at least one of the two eccentrics (15, 16), preferably both, is/are formed as an eccentric disc.

6. The process pump (100) according to any one of the preceding claims,
**characterized in that**
the first eccentric (15) and the second eccentric (16) are arranged on the eccentric shaft (5) by an offset of 180°.

7. The process pump (100) according to any one of the preceding claims
**characterized in that**
the connecting rods (8, 11, 14) each have a connecting rod shank (8b, 11b, 14b) and a small connecting rod top end (8c, 11c, 14c) for functional connection with the crossheads (7, 10, 13), wherein the large connecting rod top end (8a, 11a, 14a), the connecting rod shank (8b, 11b, 14b), and the small connecting rod top end (8c, 11c, 14c) are formed as one piece.

8. The process pump (100) according to any one of the preceding claims
**characterized in that**
the eccentric shaft (5) is formed as one piece.

9. The process pump (100) according to any one of the preceding claims,
**characterized in that**
a balancing mass (24) is arranged on the eccentric shaft (5).

10. The process pump (100) according to any one of the preceding claims,
**characterized in that**
the process pump (100) has at least one pump head formed as a single-acting (102a, 103a, 104a) or double-acting pump head (102, 103, 104).

11. The process pump (100) according to claim 10,
**characterized in that**
the at least one pump head (102, 102a, 103, 103a, 104, 104a) is formed as a membrane pump head.

## Revendications

1. Pompe de process (100) comprenant un mécanisme bielle-manivelle (1) et au moins trois cylindres (2, 3, 4) qui vus autour du mécanisme bielle-manivelle (1) représentent un premier cylindre (2), un deuxième cylindre (3), et un troisième cylindre (4), ledit mécanisme bielle-manivelle (1) comprenant un vilebrequin, **caractérisée en ce que** pour chaque cylindre (2, 3, 4) le mécanisme bielle-manivelle (1) comprend une crosse de piston (7, 10, 13) et une bielle (8, 11, 14) comprenant, chacune, un grand oeil de bielle (8a, 11a, 14a) pour recevoir ledit vilebrequin, lesdites crosses de piston (7, 10, 13) étant couplées de façon opérationnelle audit vilebrequin par l'intermédiaire desdites bielles (8, 11, 14),
ledit vilebrequin étant réalisé sous forme d'un arbre excentrique (5) comprenant un premier excentrique (15) et un deuxième excentrique (16), la bielle (8) dudit premier cylindre (2) et la bielle (14) dudit troisième cylindre (4) étant disposées audit premier excentrique (15), et la bielle (11) dudit deuxième cylindre (3) étant disposée audit deuxième excentrique (16) de façon que le grand oeil de bielle (8a) de la bielle (8) du premier cylindre (2) et le grand oeil de bielle (14a) de la bielle (14) du troisième cylindre (4) ont un axe central commun (17), ledit mécanisme bielle-manivelle (1) présentant un ordre d'attaque premier cylindre (2) - troisième cylindre (4) - deuxième cylindre (3).

2. Pompe de process (100) selon la revendication 1,
**caractérisée en ce que**
ledit mécanisme bielle-manivelle (1) comprend exactement trois cylindres (2, 3, 4).

3. Pompe de process (100) selon la revendication 1 ou 2,
**caractérisée en ce que**
les axes (20, 21, 22) des cylindres (2, 3, 4) mutuellement voisins présentent un décalage angulaire (W₁₋₂, W₂₋₃) de 60° l'un à l'autre.

4. Pompe de process (100) selon la revendication 3,
**caractérisée en ce que**
le décalage angulaire (W₁₋₃) entre l'axe (20) du premier cylindre (2) et l'axe (22) du troisième cylindre (4) est de 120°.

5. Pompe de process (100) selon l'une quelconque des revendications précédentes,
**caractérisée en ce que**
au moins un desdits deux excentriques (15, 16), de préférence les deux, est/sont réalisé(s) sous forme d'un disque excentrique.

6. Pompe de process (100) selon l'une quelconque des revendications précédentes,
**caractérisée en ce que**
le premier excentrique (15) et le deuxième excentrique (16) sont disposés sur ledit arbre excentrique (5) de façon décalée de 180°.

7. Pompe de process (100) selon l'une quelconque des revendications précédentes,
**caractérisée en ce que**
les bielles (8, 11, 14) comprennent, chacune, un corps de bielle (8b, 11b, 14b) et un petit oeil de bielle (8c, 11c, 14c) pour un couplage opérationnel à lesdites crosses de piston (7, 10, 13), le grand oeil de bielle (8a, 11a, 14a), le corps de bielle (8b, 11b, 14b), et le petit oeil de bielle (8c, 11c, 14c) étant réalisés de façon intégrale.

8. Pompe de process (100) selon l'une quelconque des revendications précédentes,
**caractérisée en ce que**
ledit arbre excentrique (5) est réalisé de façon intégrale.

9. Pompe de process (100) selon l'une quelconque des revendications précédentes,
**caractérisée en ce que**
une masse d'équilibrage (24) est disposée sur ledit arbre excentrique (5).

10. Pompe de process (100) selon l'une quelconque des revendications précédentes,
**caractérisée en ce que**
ladite pompe de process (100) comprend au moins une tête de pompe qui est réalisée sous forme d'une tête de pompe à effet simple (102a, 103a, 104a) ou à effet double (102, 103, 104).

11. Pompe de process (100) selon la revendication 10,
**caractérisée en ce que**
ladite au moins une tête de pompe (102, 102a, 103, 103a, 104, 104a) est réalisée sous forme d'une tête de pompe à membrane.
